# EUROPEAN PATENT APPLICATION

(11) **EP 2 408 039 A1**
(43) Date of publication of application: **18.01.2012**
(21) Application number: 11166792.9
(22) Date of filing: 19.05.2011
(51) Int. Cl.: H01M 2/02

(54) **Secondary battery and method of making a secondary battery**

(30) Priority: 21.06.2010 US 357024 P; 12.04.2011 US 85412
(71) Applicant: Samsung SDI Co., Ltd., Yongin-si, Gyeonggi-do (KR)
(72) Inventor: AHN, Chang-Bum, Gyeonggi-do (KR)
(74) Representative: Walaski, Jan Filip

(57) **Abstract**

A pouch-type secondary battery comprises an electrode assembly having electrode tabs, a case accommodating the electrode assembly, wherein the tabs extend outside the case, the case comprising a housing and a cover and a bonding member disposed around a periphery of the housing for bonding the cover to the housing. The bonding portion seals the case so that insulating tapes around the electrode tabs are not required.

## Description

The invention relates to a secondary battery including an electrode assembly and a pouch-type case, and a method of making the secondary battery.

In general, an insulating tape is attached to an electrode tab of an electrode assembly to prevent a short-circuit with a pouch-type case. In this secondary battery, the insulating tape attached to the electrode tab may cause leakage of electrolyte by preventing the sealing of the case.

Embodiments of the invention aim to provide a secondary battery that prevents a short-circuit between an electrode tab and a pouch-type case without using an insulating tape for the electrode tab. Further, the embodiments aim to provide a secondary battery that can prevent leakage of electrolyte.

In addition, the embodiments aim to allow manufacture of a secondary battery having large capacity by variously changing the thickness of an electrode assembly disposed in a pouch-type case.

According to the present invention, there is provided a pouch-type secondary battery comprising an electrode assembly having electrode tabs, a case accommodating the electrode assembly, wherein the tabs extend outside the case, the case comprising a housing and a cover and a bonding member disposed around a periphery of the housing for bonding the cover to the housing.

The electrode tabs may directly contact the bonding member. Insulating tape that may be wound around the electrode tabs in a conventional pouch-type battery to insulate the electrode tabs from the pouch is therefore not required.

The housing may comprise a flange portion and the bonding member may be formed on the flange portion.

The battery may be sealed by thermally bonding the cover, the bonding member and the housing together.

The housing may comprise an inner resin layer, an outer resin layer and a metal layer sandwiched between the inner resin layer and the outer resin layer, wherein the bonding member is formed on the inner resin layer. The inner resin layer may include an adhesive layer.

The bonding member may comprise one or more bonding layers. The bonding member may have a thickness between 100µm and 200µm. The bonding member may comprise one or more of polypropylene, polyethylene, polyethelyne terephthalate or polyacrylonitrile.

In one embodiment, the case may comprise a spacer and first and second bonding members on either side of the spacer, wherein the cover is bonded to the first bonding member. The secondary battery may further comprise an inner resin layer, an outer resin layer and a metal layer between the inner and outer resin layers, wherein the second bonding member is disposed between the spacer and the inner resin layer. The inner resin layer, the metal layer and the outer resin layer may extend to form the cover.

The spacer may comprise grooves for receiving the electrode tabs, and the first bonding member may be arranged on top of the electrode tabs when the tabs are located in the grooves.

According to the invention, there is further provided a method of making a secondary battery, the method comprising providing a case for an electrode assembly having electrode tabs, the case having a cover, disposing a bonding member on a bonding portion of the case, placing the electrode assembly in the case so that electrode tabs extend out of the case and thermally bonding the cover, the bonding member and the bonding portion of the case together.

The method may further comprise locating the electrode tabs in grooves in a side of the case prior to disposing the bonding member on the bonding portion of the case. An insulating tape is not attached to the electrode tabs of the electrode assembly of the secondary battery according to the present invention. Therefore, it is possible to reduce the manufacturing cost, because an insulating tape and a process of attaching the insulating tape are not needed in the secondary battery.

Further, the secondary battery according to the present invention is a pouch-type secondary battery, in which there is no insulating tape where the case of the secondary battery is bonded. Therefore, it is possible to prevent leakage of electrolyte by improving the bonding ability of the case of the secondary battery.

Further, in the case of the secondary battery according to the present invention, the housing portion for the electrode assembly in the case may be formed by the bonding members including a spacer. Therefore, it is possible to reduce the cost for the process, because the process of deep drawing for forming the housing portion in the case is not needed. Further, the size of the housing portion of the electrode assembly is not limited by deep drawing. Accordingly, it is possible to variously change the thickness of the electrode assembly, and particularly, it is advantageous in manufacturing a secondary battery having high capacity.

Embodiments of the invention will now be described by way of example with reference to the accompanying drawings, in which:
FIG. 1 is a perspective view of a pouch-type secondary battery according to an embodiment of the present invention;
FIG. 2 is an exploded view of the secondary battery shown in FIG. 1;
FIG. 3 is a view enlarging the portion A of FIG. 2;
FIG. 4 is a perspective view of a pouch-type secondary battery according to an embodiment of the present invention;
FIG. 5 is an exploded view of the secondary battery shown in FIG. 4;
FIG. 6 is a view enlarging the portion B of FIG. 5;
FIG. 7 is a perspective view of a pouch-type secondary battery according to an embodiment of the present invention;
FIG. 8 is an exploded view of the secondary battery shown in FIG. 7;
FIG. 9 is a view enlarging the portion C of FIG. 8;
FIG. 10 is a perspective view of a pouch-type secondary battery according to an embodiment of the present invention;
FIG. 11 is an exploded view of the secondary battery shown in FIG. 10;
FIG. 12 is a view enlarging the portion D of FIG. 11; and
FIG. 13 is a perspective view showing the front of a pouch-type secondary battery according to an embodiment of the present invention.

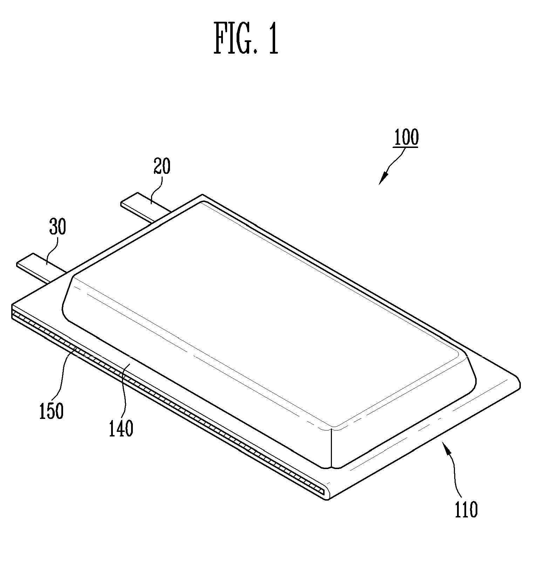

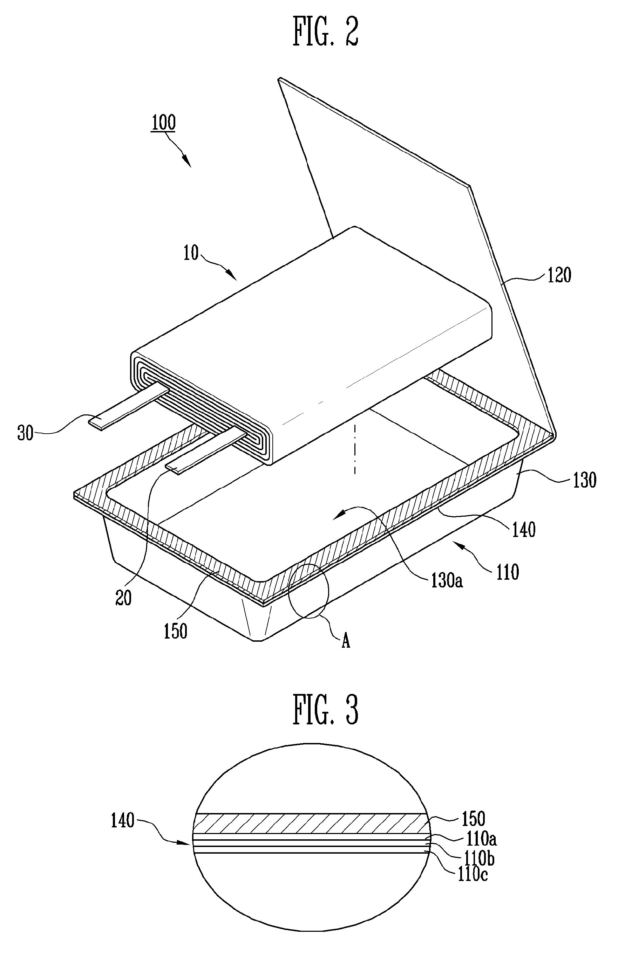

Referring to FIGS. 1 and 2, a pouch-type secondary battery 100 according to the present embodiment includes an electrode assembly 10, a pouch-type case 110 accommodating the electrode assembly 10, and a bonding member 150 for sealing the pouch-type case 110. The case 110 has a bonding portion 140 where the bonding member 150 for sealing the case 110 is disposed.

First, in the electrode assembly 10, the electrode assembly 10 is formed by winding a first electrode plate, a second electrode plate, and a separator interposed between the electrode plates. A first electrode tab 20 is attached to the first electrode plate and a second electrode tab 30 is attached to the second electrode. The electrode assembly 10 is electrically connected with the outside by the first and second electrode tabs 20, 30 attached to the electrode plates. Hereinafter, the first electrode plate is referred to as a negative plate and the second electrode plate is referred to as a positive plate, for the convenience of description.

The negative plate includes a negative active material layer and an uncoated part. The negative active material layer is a portion coated with a negative active material on both sides or one side of a negative collector and the uncoated part is a portion without the negative active material coated in the negative collector.

In general, the negative current collector is a material having high conductivity and is not specifically limited as long as it does not cause chemical changes. For example, the negative current collector may be made of aluminium, nickel, titanium, and calcination carbon. The negative active material layer includes a negative active material, which is a layered compound containing lithium, a conductive material improving conductivity, and a binder improving bonding force between the layered compound and the conductive material. The negative active material layer is formed by mixing the negative active material, the conductive material, and the binder with a solvent in a slurry and then applying the slurry to the negative collector. Preferably, the solvent may be NMP (N-Methyl-2-Pyrrolidone), the negative active material may be lithium cobalt oxide (LiCoO₂), the conductive material may be acetylene black, and the binder may be polyvinylidene fluoride, but they are not limited thereto.

The positive plate includes a positive active material layer and an uncoated part. The positive active material layer is coated with a positive active material on both sides or one side of a positive current collector.

In general, the positive current collector is a conductive metal plate, and for example, may be made of copper, stainless steel, aluminium, and nickel. The positive active material layer is formed by mixing the positive active material and a binder improving bonding force of the positive active material with a solvent in a slurry and then applying the slurry to the positive collector. Preferably, the solvent may be NMP (N-Methyl-2-Pyrrolidone), the positive active material may be graphite, and the binder may be polyvinylidene fluoride, but they are not limited thereto. As described above, when graphite is used for the positive active material, the negative plate corresponding to the positive plate may have a smaller area than the positive plate. On the other hand, when tin oxide (SnO) or lithium titanium oxide (ITO) is used for the positive active material, the negative plate corresponding to the positive plate may have a larger area than the positive plate.

The separator is interposed between the negative plate and the positive plate. The separator functions as an ion path and prevents contact between the negative plate and the positive plate. Therefore, the separator is formed of an insulating thin film having high ion transmittance and mechanical strength. For example, the separator may be porous film or non-woven fabric including polyethylene, polypropylene, or polyvinylidene fluoride.

The electrode assembly 10 is formed by winding the negative plate and the positive plate with the separator interposed therebetween. The electrode assembly 10 wound as described above is accommodated with electrolyte in the pouch case 110 and the pouch case 110 is sealed, thereby forming the secondary battery 100.

Further, the electrode assembly 10 includes a first electrode tab 20 and a second electrode tab 30. The electrode tabs 20, 30 are attached to the uncoated parts of the negative plate and the positive plate, respectively. The first and second electrode tabs 20, 30 may be made of nickel or aluminium. Further, the electrode tabs 20, 30 are attached to the electrode plates by any one or more of ultrasonic welding, resistance welding, and laser welding. In the pouch-type secondary battery 100 of the present invention, the first and second electrode tabs 20, 30 are exposed to the outside of the case 110 through the bonding portion 140 of the pouch-type case 110. Therefore, the electrode assembly 10 is electrically connected with the outside by the first and second electrode tabs 20, 30 attached to the electrode plates.

In the secondary battery 100 according to the present invention, the pouch-type case 110 accommodating the electrode assembly 10 is composed of a cover 120 and a main body 130. The main body 130 of the pouch-type case 110 has a housing portion 130a that is a space for accommodating the electrode assembly 10 and the bonding portion 140 extending outside from the inlet of the housing portion 130a. The housing portion 130a may be formed by deep-drawing an integral rectangular laminate sheet. The cover 120 is integrally connected with one side of the bonding portion 140. The secondary battery 100 is manufactured by disposing the electrode assembly 10 in the housing portion 130a of the main body 130 and then thermal-bonding the bonding portion 140, with the main body 130 and the cover 120 in close contact.

The laminate sheet of the pouch-type case 110 includes an inner resin layer, a metal layer, and an outer resin layer. In general, the metal layer is a thin aluminium layer and the upper and lower sides of the thin aluminium layer are covered with synthetic resin, such as polypropylene or polyethylene. Accordingly, the laminate sheet has a stacked structure including the metal layer, the inner resin layer, and the outer resin layer. Further, the inner resin layer is made of a heat adhesive resin to seal the case 110. Therefore, the case is sealed by pressing the inner resin layer, particularly heating and pressing the bonding portion.

Conventionally, an insulating tape is attached to the electrode tabs of the pouch-type secondary battery. However, an insulating tape is not attached to the electrode tabs 20, 30 in the electrode assembly 10 of the secondary battery according to the present invention.

The insulating tape is provided to prevent contact and short-circuit between the metal layer of the laminate sheet and the electrode tabs 20, 30, when sealing the pouch-type case 110. However, the insulating tape interferes with bonding of the bonding portion 140 and the cover 120 of the pouch-type case 110. Therefore, bonding of the pouch-type case 110 may be incompletely made by the insulating tape, such that a path through which moisture permeates from the outside or the electrolyte leaks from the inside to the outside may be formed. Hereafter, this is described in detail.

The pouch-type case 110 is sealed by thermal bonding, after accommodating the electrode assembly 10 and the electrolyte therein. In detail, the bonding portion 140 of the pouch-type case 110 and the cover 120 contacting the bonding portion 140 are pressed by a specific jig and heated above predetermined temperature. The electrode tabs 20, 30 exposed to the outside through the bonding portion 140, however, interfere with controlling temperature and pressure required for the thermal bonding of the case 110. Further, non-uniform pressure is applied by the thickness of electrode tabs 20, 30 and the insulating tapes attached to the electrode tabs 20, 30. That is, higher temperature and pressure than the thermal bonding are applied to the portions where the electrode tabs 20, 30 are positioned, in the bonding portion 140.

That is, temperature and pressure concentrate on the portions where the electrode tabs 20, 30 are positioned. Therefore, the insulating tapes attached to the electrode tabs 20, 30 are easily damaged. When the insulating tapes are damaged, a short-circuit may be caused by contact between the electrode tabs 20, 30 and the metal layer of the pouch-type case 110. In particular, the insulating tapes are more damaged, when the electrode tabs 20, 30 are not made of the same kind of metal as the metal layer. As described above, there is a problem that it is difficult to ensure sufficient safety for the secondary battery 100, with the insulating tapes attached to the electrode tabs 20, 30.

However, secondary batteries according to the present invention make it possible to improve sealability of the pouch-type case 110 without a short-circuit between the electrode tabs and the case, even without using an insulating tape.

Referring to FIGS. 1 and 3, an insulating tape is not attached to the first and second electrode tabs 20, 30 of the secondary battery 100 according to the present embodiment. Further, the case 110 of the secondary battery 100 according to the present embodiment further includes a separate bonding member 150 in the housing portion 130a and the bonding portion 140. The bonding member 150 is only formed the bonding portion that is bonded.

As described above, the case 110 is composed of the inner resin layer 110a, the metal layer 110b, and the outer resin layer 110c. The inner resin layer 110a is a layer that is thermal-bonded by heat and pressure applied with the electrode assembly 10 accommodated, and usually made of CPP (cast polypropylene). Further, the inner resin layer 110a may further include an adhesive layer. The adhesive layer supplements small bonding force of the inner resin layer 110 to the metal layer 110b. The metal layer is a layer preventing air, moisture etc. from flowing into the battery and usually made of aluminium. The outer resin layer protects the battery from the outside, such that it needs high tensile strength and weatherability to the thickness. For example, stretched nylon film may be used for the outer resin layer.

The bonding member 150 is separately formed and disposed on the inner resin layer 110a, which is the upper surface of the bonding portion 140 of the case 110. That is, the separate bonding member 150 is disposed on the upper surface of the bonding portion 140. Accordingly, the bonding portion 140 that is bonded in the case 110 has a thickness different from the other portions of the case. That is, since the separate bonding member 150 is disposed only on the bonding portion 140, the bonding portion 140 of the case 110 increases in thickness as much as the thickness of the bonding member 150.

The bonding member 150 may be selectively made of any one or more of polypropylene, polyethylene, polyterephthalate, and polyacrylonitrile.

Further, the thickness of the bonding member 150 may be 100µm to 200µm. The bonding member 150 is likely to be damaged in the bonding or thermal bonding, when the thickness of the bonding member 150 is smaller than 100µm. Therefore, there may be a problem that current flows through the damaged portion of the bonding portion. Further, it may be difficult to seal the case 110, when the thickness of the bonding member 150 is larger than 200µm.

Referring to FIG. 2, when the secondary battery 110 is manufactured with the pouch-type case 110 including the bonding member 150, a short-circuit does not occur even without attaching an insulating tape to the first and second electrode tabs 20, 30 of the electrode assembly 10. As shown in the figures, the first and second electrodes 20, 30 of the electrode assembly 10 are exposed to the outside through the bonding portion 140 of the case 110. The case 110 is bonded by pressing the bonding portion 140 at high temperature.

In the thermal bonding, the secondary battery 110 according to the present embodiment, a short-circuit with the case 110 does not occurred even though an insulating tape is not attached to the electrode tabs 20, 30. Further, since the bonding portion 140 of the case 110 is uniformly bonded by the bonding member 150, sealability of the case 110 is improved. As described above, the bonding member 150 is manufactured separately from the pouch-type case 110 and attached to the bonding portion 140.

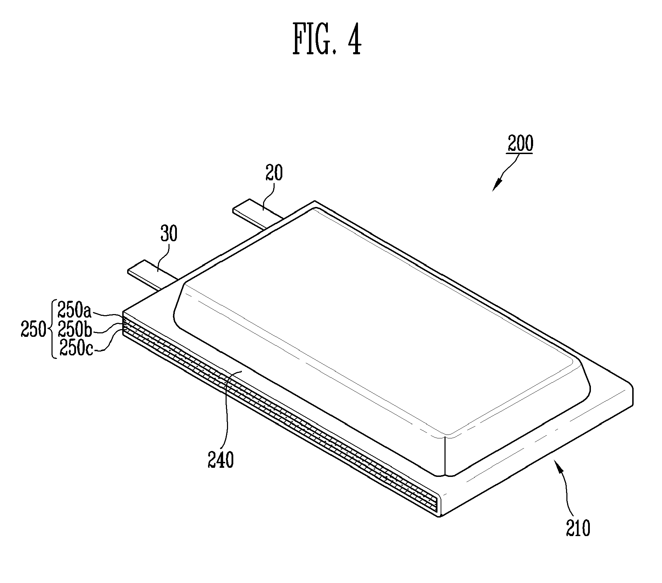

Referring to FIGS. 4, 5 and 6, a pouch-type secondary battery 200 according to another embodiment includes an electrode assembly 10, a pouch-type case 210 accommodating the electrode assembly 10, and bonding members 250 composed of a plurality of layers to seal the pouch-type case 210. The case 210 has a bonding portion 240 where the bonding members 250 are disposed.

The electrode assembly 10 is formed by winding an negative plate, a positive plate, and a separator interposed between the electrode plates. A first electrode tab 20 is attached to the negative plate and a second electrode plate 30 is attached to the positive plate. The electrode assembly 10 is electrically connected with the outside by the first and second electrode tabs 20, 30 attached to the electrode plates. As described above, an insulating tape is not attached to the electrode tabs 20, 30. Other than the above, the configuration and operation of the electrode assembly 10 of the secondary battery 200 according to the present embodiment are the same as those of the electrode assembly 10 shown in FIGS. 1 to 3, and the detailed description is not provided.

In the secondary battery 200 according to the present embodiment, the pouch-type case 210 accommodating the electrode assembly 10 is composed of a cover 220 and a main body 230. The main body 230 of the pouch-type case 210 has a housing portion 230a that is a space for accommodating the electrode assembly 10 and the bonding portion 240 extending outside from the inlet of the housing portion 230a. The housing portion 230a may be formed by deep-drawing an integral rectangular laminate sheet. The cover 220 is integrally connected with one side of the bonding portion 240. The secondary battery 200 according to the present embodiment is manufactured by disposing the electrode assembly in the housing portion 230a of the main body 230 and then thermal-bonding the bonding portion 240 where the bonding members 250 are disposed, with the main body 230 and the cover 120 in close contact.

As described above, the case 210 is composed of the outer resin layer 210a, the metal layer 210b, and the inner resin layer 210c. The inner resin layer 210a is usually made of CPP, but may further include an adhesive layer to supplement bonding force. The metal layer 210b is generally made of aluminium and the outer resin layer 210c may be made of stretched nylon film. Other than the above, the configuration of the case 210 is the same as that the case 110 shown in FIGS. 1 to 3, and the detailed description is not provided.

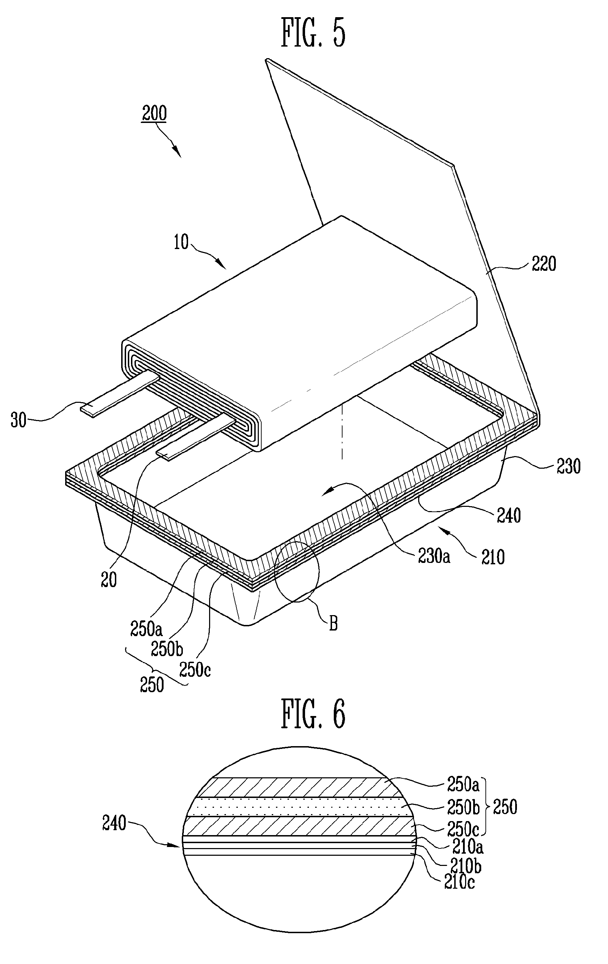

Referring to FIGS. 5 and 6, the case 210 of the secondary battery 200 according to the present embodiment includes the bonding member 250 composed of a plurality of layers, which is separately manufactured. The bonding members 250 are disposed on the upper surface of the bonding portion 240 of the case 210. Further, the bonding members 250 are separately manufactured and disposed on the bonding portion 240, as shown in FIG. 5. Accordingly, the bonding portion 240 of the case 210 increases in thickness as much as the thickness of the bonding members 250 and the thickness is different from the other portions without the bonding members 250.

FIG. 6 is a view enlarging the bonding portion 240 and the bonding members 250 disposed on the upper surface of the bonding portion 240. The bonding member 250 is composed of a plurality of layers in the present embodiment. The bonding members 250 may be divided into first, second, and third bonding members 250a, 250b, 250c. As shown in FIG. 6, the second boding member 250b is disposed between the first and third bonding members 250a, 250c. Further, the second bonding member 250b may be made of the same material as the inner resin layer 210a of the case 210, but is not limited thereto. The second bonding member 250b may be made of various polymers, in accordance with the design of the secondary battery. Preferably, the second bonding member 250b may be made of CPP.

The first bonding member 250a is a portion that contacts the first and second electrode tabs 20, 30. The first and second electrode tabs 20, 30 are exposed to the outside through the first bonding member 250a. Further, the bonding portion 240 is sealed substantially by the first bonding member 250a, when the cover 220 and the main body 230 of the case 210 is thermal-bonded. Further, the thickness of the first bonding member 250a may be 100µm to 200µm. The first bonding member 250a is likely to be damaged in the bonding or thermal bonding, when the thickness of the first bonding member 250a is smaller than 100µm. Further, it may be difficult to seal the case 210, when the thickness of the first bonding member 250a is larger than 200µm.

The third bonding portion 250c is a portion that directly contacts the bonding portion 240 of the case 210. The third bonding member 250c may be made of the same material as the second bonding member 250b described above. Further, the third bonding member 250c may be made of the same material as the first bonding member 250a. The interface between the second bonding member 250b and the third bonding member 250c is removed, when the third bonding member 250c and the second bonding member 250b are made of the same material. Therefore, the bonding member 250 becomes composed of only two layers. Further, when the third bonding member 250c and the first bonding member 250a are made of the same material, it does not need to discriminate the portion contacting the cover 220 of the case or the portion contacting the main body 230 in the bonding members 250. That is, the upper surface and the lower surface of the bonding members 250 is not discriminated. Therefore, it does not need to distinguish the direction of the bonding member 250 and the process efficiency is increased, when the bonding members 250 are separately manufactured and attached to the case 210.

The bonding members 250 of the secondary battery 210 according to the present embodiment are shown to be composed of three layers, but as described above, the layers of the bonding member 250 may be less than three. Further, the layers of the bonding members 250 may be more than three. This depends on the kinds of materials of the layers of the bonding members 250.

As described above, the bonding members 250 composed of a plurality of layers are disposed in the bonding portion 240 of the pouch-type case 210 according to the present embodiment. Therefore, the thickness of the bonding member 250 is added to the bonding portion 240 and the depth of the housing portion 230a of the main body 230 correspondingly increases.

The housing portion 230a of the main body 230 is a space accommodating the electrode assembly 10. The depth of the housing portion 230a depends on the thickness of the electrode assembly 10. The housing portion 230a may be formed by deep drawing. The deep drawing is a method of manufacturing a container without a joint from a flat plate. A circular cylinder, a polygonal cylinder, and other complicated shapes can be achieved by the method. The resin layer of the laminate has small durability than the metal layer. Therefore, the depth of the housing portion 230a which can be achieved by deep drawing is limited by the resin layer.

On the other hand, in the case 210 including the bonding members 250 according to the present embodiment, the depth of the housing portion 230a is increased by the bonding members 250 composed of a plurality of layers. That is, the thickness of the bonding portion 240 with the bonding members 250 is relatively increased as much as the thickness of the bonding members 250, by the thickness of the bonding members 250 themselves, which are composed of a plurality of layers. Accordingly, the housing portion 230a can generally accommodate the electrode assembly 10 having a thickness as much as the depth, which can be achieved by deep drawing, added with the thickness of the bonding members 250.

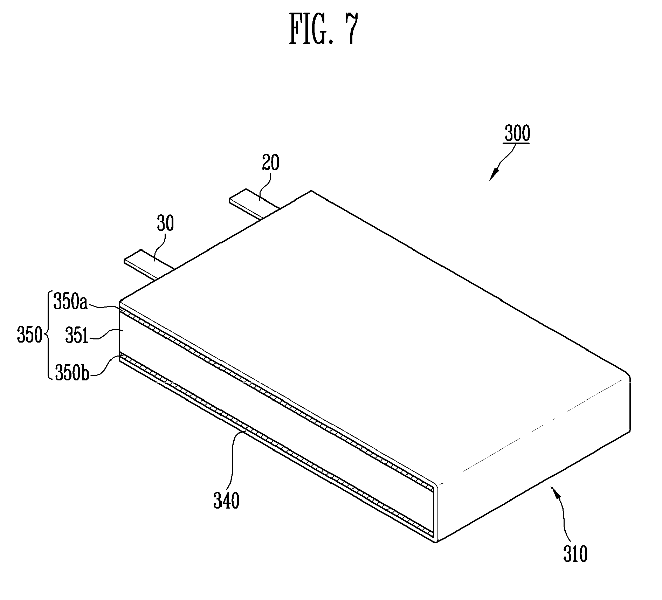

Referring to FIGS. 7, 8 and 9, a pouch-type secondary battery 300 according to another embodiment includes an electrode assembly 10 and a pouch-type case 310 accommodating the electrode assembly 10, the pouch type case comprising a sidewall structure 350, the sidewall structure comprising a spacer 351 between first and second bonding members 350a, 350b. The case 310 has a bonding portion 340 where the second bonding member 350b for sealing the case 310 is disposed.

The electrode assembly 10 is formed by winding a negative plate, a positive plate, and a separator interposed between the electrode plates. A first electrode tab 20 is attached to the negative plate and a second electrode plate 30 is attached to the positive plate. As described above, an insulating tape is not attached to the electrode tabs 20, 30. The electrode assembly 10 of the secondary battery 300 according to the present embodiment is the same as the electrode assembly 10 shown in FIGS. 1 to 3, and the detailed description is not provided.

In the secondary battery 300 according to the present embodiment, the cover 320 is integrally connected with one side of the main body of the pouch-type case 310 accommodating the electrode assembly 10. The main body forms a base portion of the case, or can be seen as one part of a one-piece cover on which the sidewall structure is disposed, with the cover 320 extending from the base portion being folded over the sidewall structure 350 to form the case 310. The case 310 according to the present embodiment does not undergo deep drawing. The spacer 351 and bonding members 350a, b are separately manufactured and provided in the case 310.

The case 310 is composed of the outer resin layer 310a, the metal layer 210b, and the inner resin layer 210c. The inner resin layer 310a is usually made of CPP and may further include an adhesive layer to supplement bonding force. The metal layer 310b is generally made of aluminium and the outer resin layer 310c may be made of stretched nylon film.

A housing portion 330a accommodating the electrode assembly 10 is formed by the sidewall structure 350. In detail, the sidewall structure 350 having a predetermined thickness is disposed on the upper surface of the bonding portion 340 of the case 310. Therefore, the case 310 has a housing portion 330a that can accommodate the electrode assembly 10. The thickness of the housing portion 330a formed as described above depends on the thickness of the sidewall structure 350 disposed on the bonding portion 340.

In the present embodiment, the case 310 does not undergo deep drawing, unlike the embodiments described above. Accordingly, since deep drawing is not performed, it is possible to reduce the manufacturing cost of the secondary battery 300. Further, the depth of the housing portion which can be achieved by deep drawing was limited. However, since the housing portion 330a of the case 310 is not formed by deep drawing in the secondary battery 300 according to the present embodiment, the depth of the housing 330a is not limited. It is therefore possible to accommodate the electrode assembly 10 having various thicknesses. Therefore, it has the advantage of manufacturing a secondary battery for accommodating a thick electrode assembly 10, that is, high capacity. Other than the above, the configuration of the case 310 is the same as that the case 310 shown in FIGS. 1 to 3, and the detailed description is not provided.

As described above, in the case 310 of the secondary battery 300 according to the present embodiment, the space accommodating the electrode assembly 10 inside the case 310 is formed by the sidewall structure 350, which is now described in detail.

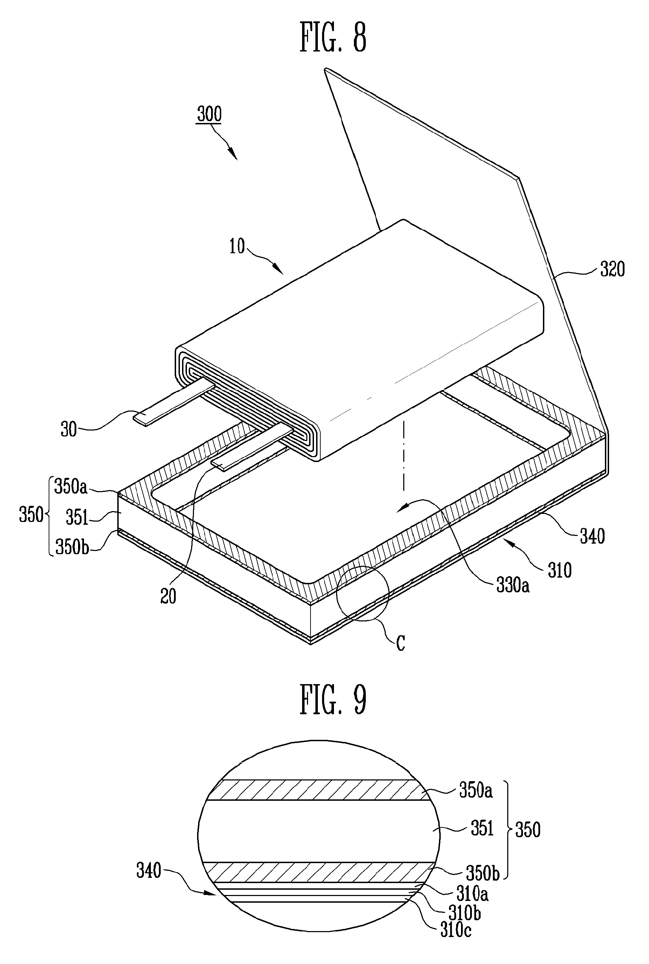

Referring to FIGS. 8 and 9, the sidewall structure 350 is disposed on the upper surface of the bonding portion 340 of the case 310. Further, the components of the sidewall structure 350 are separately manufactured and disposed on the bonding portion 340.

FIG. 9 is a view enlarging the bonding portion 340 and the sidewall structure 350 disposed on the upper surface of the bonding portion 340. The sidewall structure 350 includes the spacer 351. That is, the bonding members 350 are composed of first and second bonding members 350a, 350b, and the spacer 351 disposed between the first and second bonding members 350a, 350b.

The first bonding member 350a is a portion that contacts the first and second electrode tabs 20, 30. The first and second electrode tabs 20, 30 are exposed to the outside through the first bonding member 350a. Further, the first bonding member 350a is a portion that is substantially thermal-bonded with the cover 320 of the case 310.

The first bonding member 350a may be selectively made of any one or more of polypropylene, polyethylene, polyterephthalate, and polyacrylonitrile. Further, it is preferable that the thickness of the first bonding member 350a may be 100µm to 200µm. The first bonding member 350a is likely to be damaged in the bonding or thermal bonding, when the thickness of the first bonding member 350a is smaller than 100µm. Further, the electrolyte may leak due to incomplete sealing of the case 310, when the thickness of the first bonding member 350a is larger than 200µm.

Further, the second bonding member 350b is a portion contacting the inner resin layer 310a of the case 310. The interface between the second bonding member 350b and the inner resin layer is unclear, when the second bonding member 350b is made of the same material as the inner resin layer 310a of the case 310. Further, the second bonding member 350b may be made of the same material as the first bonding member 350a described above. In this case, it is advantageous to attach the bonding members 350a, b separately manufactured to the case 310. That is, since it does not need to distinguish the upper surface from the lower surface of the bonding members 350, it is possible to reduce errors caused in the related process.

Further, it is possible to simplify the process, when attaching the bonding members 350a, b to the case 310. That is, it is possible to dispose the bonding members 350a, b between the cover 320 and the main body of the case and then attach at one time the cover 320, the bonding members 350a, b, and the main body, without separately attaching the bonding members 350 to the case 310 and then attaching the cover 320 to the bonding member 350. Further, it is possible to reduce the manufacturing cost, because there is no need to add a process of attaching the bonding members 350 to the case 310. The material of the second bonding member 350b described above is an example and may be various polymers.

Referring to FIGS. 8 and 9, the upper surface of the spacer 351 is covered with the first bonding member 350a and the lower surface is covered with the second bonding member 350b.

Further, the spacer 351 should not react with the electrolyte such that the electrode assembly 10 is not influenced by external pressure. Therefore, the spacer 351 should have high mechanical strength and anticorrosion. In general, the spacer 351 may be formed by molding metal having high strength and good forming performance, or engineering plastic. In this configuration, the metal may be aluminium, stainless steel, and nickel, and the plastic may be polycarbonate, nylon, polyamide, polybutylene terephthalate, and polyethylene terephthalate. As described above, the spacer 351 can be made of a material that maintains a constant space in the case 310 and does not react with the electrolyte therein, such that the material is not limited.

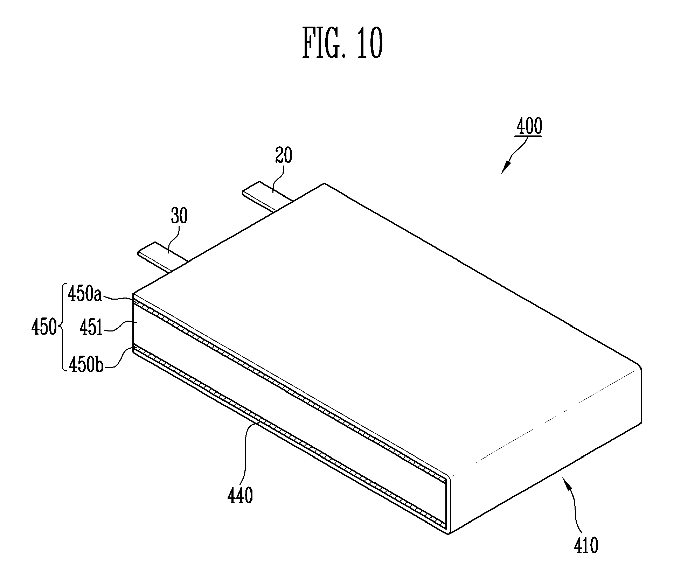

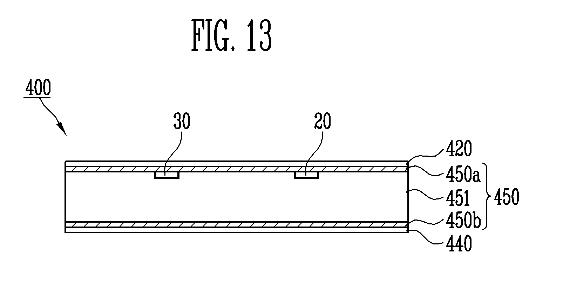

Referring to FIGS. 10 to 13, a pouch-type secondary battery 400 according to another embodiment includes an electrode assembly 10, a pouch-type case 410 accommodating the electrode assembly 10, and a sidewall structure 450 to seal the pouch-type case 410. The overall configuration of the secondary battery 400 of this embodiment is very similar to that shown in Figures 7 to 9 and corresponding parts have corresponding reference numerals.

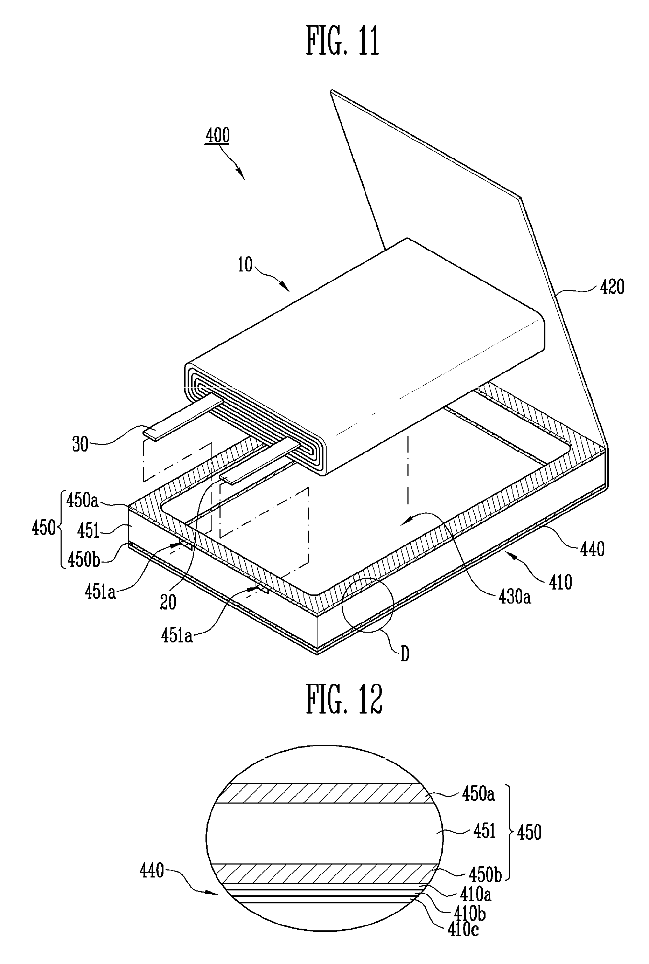

Referring to FIGS. 11 and 12, the upper surface of the spacer 451 is covered with the first bonding member 450a and the lower surface is covered with the second bonding member 450b, and sidewall structure 450 is composed of the first and second bonding members 450a, 450b and the spacer 451. The housing portion 430a is formed in the case 410 by the spacer 451. The spacer 451 maintains the gap between the cover 420 and the base portion of the case 410. Further, the spacer 451 may be formed by moulding metal having high strength and good forming performance, or engineering plastic such that the electrode assembly is not influenced by external pressure. In this configuration, the metal may be aluminium, stainless steel, and nickel, and the plastic may be polycarbonate, nylon, polyamide, polybutylene terephthalate, and polyethylene terephthalate. The spacer 451 can be made of a material that maintains a constant space in the case 410 and does not react with the electrolyte therein, such that the material is not limited.

Referring to FIGS. 11 to 13, the spacer has two steps, or grooves, 451a. The two steps 451a are spaced apart from each other and formed on the upper surface of the spacer 451. Accordingly, the steps 451a contact the first bonding member 450a. The steps 451a are paths through which the first and second electrode tabs 20, 30 of the electrode assembly 10 pass. Therefore, since the first and second electrode tabs 20, 30 fit within the space formed by the steps 451a, the first bonding member 450a presents a planar surface which provides a good bond with the cover 420. Since the steps 451a can be formed in the process of manufacturing the spacer 451, an additional process is not needed. Further, the first and second electrode tabs 20, 30 are spaced by the steps 451a, thereby preventing a short-circuit. Other than the above, since the configuration and operation of the spacer 451 are the same as the spacer 351 shown in FIGS. 7 to 9, the detailed description is not provided.

In manufacturing the secondary battery, the spacer 451 is attached to the base portion of the case via the second bonding member 450b. The electrode assembly 10 is then placed in position with the electrode tabs in the grooves 451a. The first bonding member 450a is then disposed over the top of the electrode tabs before the case is sealed.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A pouch-type secondary battery (100, 200, 300, 400) comprising:
an electrode assembly (10) having electrode tabs (20, 30);
a case (110, 210, 310, 410) accommodating the electrode assembly, wherein the tabs extend outside the case, the case comprising a housing (130, 230, 330a, 430a) and a cover (120, 220, 320, 420); and
a bonding member (150, 250) disposed around a periphery of the housing for bonding the cover to the housing.

2. The secondary battery of claim 1, wherein the electrode tabs (20, 30) directly contact the bonding member (150, 250).

3. The secondary battery of claim 1 or 2, wherein the housing (130, 230) comprises a flange portion (140, 240) and the bonding member (150, 250) is formed on the flange portion (140, 240).

4. The secondary battery of any one of the preceding claims, wherein the battery is sealed by thermally bonding the cover (120), the bonding member (150) and the housing (130) together.

5. The secondary battery of any one of the preceding claims, wherein the housing comprises an inner resin layer (110a, 210a), an outer resin layer (110c, 210c) and a metal layer (110b, 210b) sandwiched between the inner resin layer and the outer resin layer, wherein the bonding member (150, 250) is formed on the inner resin layer (110a, 210a).

6. The secondary battery of claim 5, wherein the inner resin layer includes an adhesive layer.

7. The secondary battery of any one of the preceding claims, wherein the bonding member comprises one or more bonding layers (150, 250a, 250b, 250c).

8. The secondary battery of any one of the preceding claims, wherein the bonding member (150, 250a, 350a, 450a) has a thickness between 100µm and 200µm.

9. The secondary battery of any one of the preceding claims, wherein the bonding member comprises one or more of polypropylene, polyethylene, polyethelyne terephthalate or polyacrylonitrile.

10. The secondary battery of any one of the preceding claims, wherein the case (300, 400) comprises:
a spacer (351, 451); and
first and second bonding members (350a, 350b; 450a, 450b) on either side of the spacer;
wherein the cover (320) is bonded to the first bonding member.

11. The secondary battery of claim 10, further comprising:
an inner resin layer (310a);
an outer resin layer (310c);
a metal layer (310b) between the inner and outer resin layers,
wherein the second bonding member (350b) is disposed between the spacer and the inner resin layer (310a).

12. The secondary battery of claim 11, wherein the inner resin layer (310a, 410a), the metal layer (310b, 410b) and the outer resin layer (310c, 410c) extend to form the cover (320, 420).

13. The secondary battery of claim 10, 11 or 12, wherein the spacer comprises grooves (451a) for receiving the electrode tabs, and the first bonding member (450a) is arranged on top of the electrode tabs when the tabs are located in the grooves.

14. A method of making a secondary battery, the method comprising:
providing a case for an electrode assembly having electrode tabs, the case having a cover;
disposing a bonding member on a bonding portion of the case;
placing the electrode assembly in the case so that electrode tabs extend out of the case; and
thermally bonding the cover, the bonding member and the bonding portion of the case together.

15. The method of claim 14, further comprising locating the electrode tabs in grooves (451a) in a side of the case prior to disposing the bonding member on the bonding portion of the case.
